Europäisches Patentamt

(19) European Patent Office

Office européen des brevets

(11) Publication number: **0 091 724**
**B1**

## (12) EUROPEAN PATENT SPECIFICATION

(45) Date of publication of patent specification: **16.09.87**

(51) Int. Cl.⁴: **H 05 B 41/29**

(21) Application number: **83300693.5**

(22) Date of filing: **11.02.83**

(54) **Ballast apparatus for operating a discharge lamp.**

(30) Priority: **11.02.82 US 347274**

(43) Date of publication of application:
**19.10.83 Bulletin 83/42**

(45) Publication of the grant of the patent:
**16.09.87 Bulletin 87/38**

(84) Designated Contracting States:
**BE DE FR GB IT NL SE**

(56) References cited:
**FR-A-2 511 830**
**US-A-4 170 744**
**US-A-4 187 449**

(73) Proprietor: **NORTH AMERICAN PHILIPS LIGHTING CORPORATION**
**100 East 42nd Street**
**New York, NY 10017 (US)**

(72) Inventor: **Hicks, John Merrill**
**117 Presidio Court**
**Verona Pennsylvania (US)**
Inventor: **Engel, Joseph Charles**
**107 Overlook Circle**
**Monroeville Pennsylvania (US)**
Inventor: **Spreadbury, Robert James**
**3515 Loans Ferry Road**
**Murrysville Pennsylvania (US)**

(74) Representative: **Rolfes, Johannes Gerardus Albertus et al**
**INTERNATIONAAL OCTROOIBUREAU B.V. Prof. Holstlaan 6**
**NL-5656 AA Eindhoven (NL)**

Courier Press, Leamington Spa, England.

## Description

This invention relates to a ballast apparatus for operating a discharge lamp with AC energy having a frequency in the acoustic range without generating in the ballast apparatus more than a very minor accompanying audible noise, which apparatus comprises input terminals adapted to be connected across the AC power mains and output terminals means across which said lamp to be operated is to be connected; current-limiting means comprising inductive reactance means and capacitive reactance means connecting to said input terminals, and rectifier means having an input connected to said current-limiting means to generate a current-limited low-ripple DC potential at the output thereof. Such an apparatus is known from US—A—4.187.449.

The discharge lamp operating circuit according to US—A—4.187.449 provides a low ripple DC power supply from a single-phase AC source without the use of a filter capacitor. The DC power supply circuit is used with a pulse generating circuit to provide pulsed operation of a gas discharge lamp such as a high pressure sodium vapor discharge lamp. It appeared, however, that particularly for high intensity discharge lamps, large reignition voltage peaks were encountered.

The object of the invention is to offer a ballast apparatus having a high efficacy in which reignition voltage peaks are essentially eliminated, whereby the noise from the ballast is reduced considerably.

A ballast apparatus of the type mentioned in the opening paragraph according to the invention is therefore characterized in that the apparatus comprises a lamp starting circuit with series-connected inductor means and capacitor means forming a resonant circuit, said starting circuit capacitor means being connected across said output terminals and said starting circuit series-connected inductor means and capacitor means connecting via blocking capacitor means across said output of said AC current-limiting and rectifying means; a pair of transistors comprising oscillator means electrically connected in series arrangement across said output of said AC current-limiting and rectifying means, and the connection between said transistors being electrically connected to said blocking capacitor means; air-core transformer means comprising a pair of feedback windings and a pair of driving windings, a first of said feedback windings connecting in series with said starting circuit inductor means and capacitor means, and the second of said feedback windings and a current-controlling impedance means connecting in parallel with said starting circuit inductor means and capacitor means, a first of said driving windings connecting in circuit with the base of one of said transistors and the second one of said driving windings connecting in circuit with the base of the other of said transistors, and trigger means response to initial energization of said apparatus to apply a turn-on pulse to the base of one of said transistors to initiate oscillations between said transistors to generate square waves; whereby after initial energization of said apparatus and until said lamp is started, said transistors alternately conduct to deliver square waves of current to said lamp means at an oscillation frequency determined by the resonant frequency of said starting circuit series-connected inductor means and capacitor means and after said lamp is started, said transistors alternately conduct to deliver square waves if current to said operating lamp at an oscillation frequency determined by the rate of current flow into said second feedback winding.

In the ballast apparatus according to the invention the lamp is energized with a square wave, which provides the advantage that particularly for high intensity discharge lamps large reignition voltage peaks are eliminated. The ballast apparatus is provided with a dual-frequency oscillator for energizing the lamp. In the operation of the circuit after initial energization of the apparatus and until the lamp is started, the transistors alternately conduct to deliver square waves of current to the lamp at an oscillation frequency defined by the lamp starting circuit elements. After the lamp starts to conduct, the oscillator frequency of the square waves is determined by current flow into the second feedback winding different from that operable to control the initial oscillations.

It is observed that in FR—A—2.511.830 a discharge lamp circuit is described with a low ripple DC input by a fullwave rectifier which uses an oscillator producing square waves having a low frequency. However, said oscillator is not connected to the starting circuit via a feedback-winding for controlling the frequency during lamp operation after the starting phase.

In one embodiment of the invention the apparatus is characterized in that the pair of transistors are connected emitter to collector in series arrangement, with the common connected emitter and collector of said transistors connected to the blocking capacitor, a charging resistor being connected parallel to one of said transistors, wherein the current controlling impedance is a resistor, and wherein the driving windings are connected between the emitter and base of said transistors.

In order that the invention can be more clearly understood, convenient embodiments thereof will now be described, by way of example, with reference to the accompanying drawings in which:

Fig. 1 is a circuit diagram of an apparatus for operating a miniature metal-vapor lamp;

Fig. 2 is a partial showing of an apparatus similar to that of Fig. 1 wherein the lamp to be operated is a single fluorescent lamp;

Fig. 3 is a partial showing of an apparatus similar to that of Fig. 1 wherein the lamp means to be operated comprises two series-connected fluorescent lamps; and

Fig. 4 is a partial showing of the apparatus of Fig. 1 wherein the lamp to be operated is a miniature metal-vapor lamp and there is also provided a standby incandescent light source to provide illumination after periods of power interruption and during lamp warm-up.

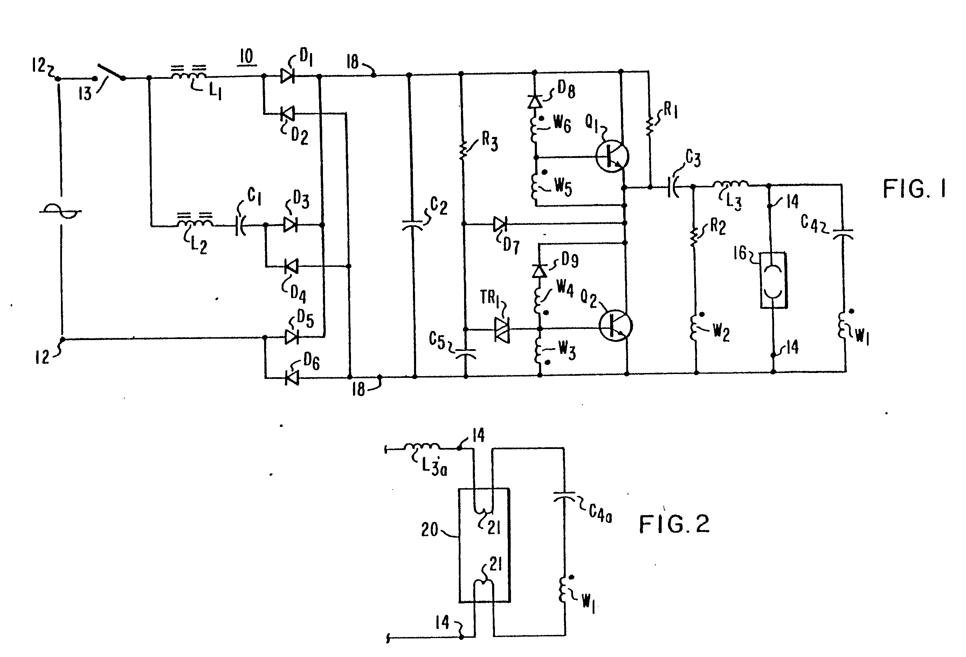

Referring to Fig. 1, apparatus 10 for starting and operating discharge lamps has input terminals 12 adapted to be connected with a switch 13 across a source of AC potential of predetermined magnitude and there are provided output terminals 14 across which the discharge lamp 16 is adapted to be operatively connected.

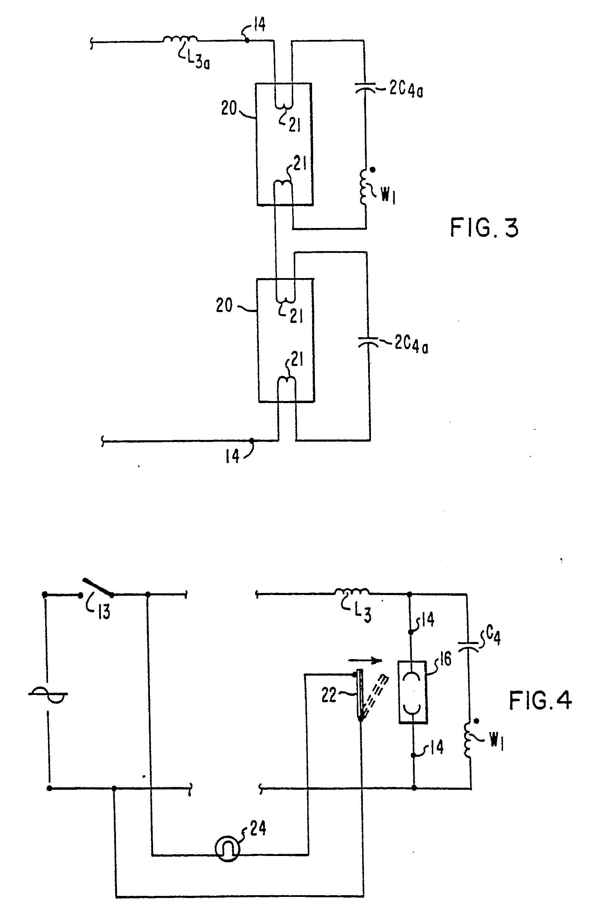

The apparatus comprises an AC current limiting and rectifying means having an input connected to the apparatus input terminals 12 and operable to generate across the output 18 thereof a current-limited low-ripple DC potential. A similar rectifying device is shown in Fig. 3 of U.S. Patent Specification No. 4,084,217 which is reference in the background section. Briefly, the inductors $L_1$ and $L_2$ are included in separate branches of one side of the AC input line and a capacitor $C_1$ connects in series with the inductor $L_2$ to form a second phase with leading current. The diodes $D_1$—$D_6$ are connected to the outputs of the three circuit branches as a three-phase full-wave rectifier bridge, the output of which appears across terminals 18 as a low-ripple DC. This DC output is current limited by the inductors $L_1$ and $L_2$ and capacitor $C_1$. For the lamp types involved, such a rectifying device is particularly adapted for operation from power mains of 277 volt, 60 Hz, for U.S. applications and 220 volt, 50 Hz for European applications. It should be understood that a high-reactance transformer could be substituted into this circuit to accommodate any of a variety of source voltages, in the manner as disclosed in U.S Patent Specification No. 4,187,449.

It is desirable, but not necessary, to parallel the output terminals 18 with a small high-frequency by-pass capacitor $C_2$ in order to ensure that none of the high-frequency components which are generated by the apparatus 10 are passed back into the power mains. The foregoing rectifying circuit thus provides a low-ripple DC power output without the need for an aluminum electrolytic capacitor and, in addition, the DC is current limited. This is advantageous in that the operating frequency of the lamps preferably will fall within the acoustic range. Since the current-limiting function occurs before the switching function, the current-limiting components are not subjected to square wave currents at the lamp operating frequency which effectively eliminates any tendency of the ballasting components, such as laminations of a magnetic structure, to "sing" at the square wave excitation frequency. The power factor is typically about 94%.

The particular lamp 16 which is intended to be operated in the circuit is a miniature metal-vapor lamp having a rated power input of 35 watts. Such a lamp requires a relatively high voltage pulse to initiate the discharge or strike the lamp and to achieve starting thereof, there is provided a series-connected inductor means $L_3$ and capacitor means $C_4$ which form a high "Q" resonant circuit

with the capacitor $C_4$ connected across the apparatus output terminals 14. The starting circuit series-connected inductor $L_3$ and capacitor $C_4$ connect via a charging resistor $R_1$ and blocking capacitor $C_3$ across the output terminals 18 of the rectifying means 10. When the apparatus is turned on, the voltage which is developed across C4 is essentially the voltage developed across the lamp during starting and it is established by the relative values of $L_3$ and $C_4$ and the current which is passed by the rectifying apparatus 10. During the starting operation, $L_3$ and $C_4$ have a representative "Q" of about 20 and in the case of a 35-watt metal-vapor lamp, approximately 1500 volts is needed to start the lamp. This voltage is readily achieved by controlling the input current together with the series-resonant circuit $L_3$—$C_4$. When the apparatus is initially turned on, current flows through $R_1$ to charge $C_3$ to a voltage which approximates that developed across terminals 18.

A pair of transistors $Q_1$, $Q_2$ comprise oscillator means and are connected, emitter-to-collector, in series arrangement across the output terminals 18 of the rectifying means 10, with the common-connected emitter and collector of these transistors connected to the blocking capacitor means $C_3$.

A drive air-core transformer means comprises a pair of feedback windings $W_1$, $W_2$ and a pair of driving windings $W_3$, $W_5$. The first of the feedback windings $W_1$ connects in series with the starting circuit inductor $L_3$ and capacitor $C_4$ and the second of the feedback windings $W_2$ and a current-controlling resistor means $R_2$ connected in parallel with the starting circuit inductor $L_3$ and capacitor $C_4$. The first of the driving windings $W_3$ connects between the emitter and base of the transistor $Q_2$ and the second of the driving windings $W_5$ connects between the emitter and base of the other transistor $Q_1$.

To initiate the operation of the device after it is turned on, there is provided a trigger means comprising resistor $R_3$, diode $D_7$, capacitor $C_5$ and trigger diode $TR_1$. When the switch 13 is closed, $C_5$ charges through $R_3$ and when the trigger diode $TR_1$ has a voltage of approximately 40 volts developed thereacross, it conducts and the $C_5$ discharges into the base of $Q_2$, turning $Q_2$ on momentarily. This initiates oscillations between the transistors to generate square waves. Prior to the lamp 16 having a discharge initiated therein, current will flow through $L_3$, $C_4$ and the feedback winding $W_1$ and as a result, the oscillator means comprising the transistors $Q_1$ and $Q_2$ will tend to oscillate at the resonant frequency which is established by $L_3$ and $C_4$. As indicated hereinbefore, because of the resonant nature of this circuit, this will apply a very high voltage across the apparatus output terminals 14.

Once the discharge in the lamp 16 is initiated, the voltage across the apparatus output terminals will drop to somewhere in the range of 20 to 30 volts. This in turn causes the current through the feedback winding $W_1$ to drop to a small fraction of its initial value, with a representative value of this current being 1/50 of its initial value. The oscillator frequency is then established by current flow into the feedback winding which is established by the value of resistor $R_2$. The drive transformer is an air-core transformer and the magnetizing inductance is quite low. The current which is flowing into $W_2$ is initially transformed and flows out of the dotted terminal of $W_5$ forming the base current for $Q_1$, which turns $Q_1$ on. Eventually, the combination of rising magnetizing current and transformed load current equals the load current in $W_2$ causing $Q_1$ to begin to turn off. This reduces the voltage across $R_2$—$W_2$ with the result that the trapped magnetizing current flows into the dotted terminal of $W_3$, which turns $Q_2$ on. This self-oscillating mode continues for the normal operation of the lamp, with a typical oscillating frequency being 1 kHz. An additional advantage of $L_3$—$C_4$ is to provide some filtering of the current into the lamp, during normal operation of the lamp, thereby reducing any tendency for RF radiation.

Windings $W_4$ and $W_6$ and associated series-connected diodes $D_8$ and $D_9$ are connected between the base and collector of each of the transistors $Q_1$ and $Q_2$ and their function is to prevent transistor saturation during normal operation of the apparatus, in order to maintain the switching speeds thereof. A typical switching speed for the transistors utilized is in the microsecond range.

In the case of miniature metal-vapor lamps, they display severe reignition voltage requirements between cycles when operated with sinewave power at commercial frequencies. This can be avoided by going to very high frequencies, but this introduces the problem of arc-tube instability. By operating these lamps with square wave power, the reignition problem is eliminated because the plasma conductivity remains essentially constant through the polarity reversals. The square wave power also provides for very smooth and acoustically quite operation of the arc tube, permitting it to be operated with a single current amplitude selected for best efficacy. The frequency of polarity reversal can be varied over a wide range, including the acoustic range such as 16 Hz to 16 kHz, since there are no audible noise problems presented by the current-limiting inductors which are isolated from the oscillator by the rectifier.

Following is a component chart for the circuit elements as shown in Fig. 1 which are designed for operating a miniature metal-vapor lamp rated at 35 watts.

### Component chart

| | |
|---|---|
| $L_1$ | 1.2H |
| $L_2$ | 1.2H |
| $L_3$ | 700µH |
| $D_1$—$D_9$ | 1N5399 |
| $C_1$ | 3µF |
| $C_2$ | 1µF |
| $C_3$ | 1µF |
| $C_4$ | 0.022µF |
| $C_5$ | 0.047µF |
| $Q_1$—$Q_2$ | MJ13003 |
| $TR_1$ | HT40 |

The foregoing circuit can also be utilized to operate low-pressure, positive-column fluorescent lamps 20 such as 4 foot fluorescent lamps having a tube diameter of 1 inch (2.54 cm). Such lamps are typically quite difficult to start on conventional rapid-start ballasts and the foregoing circuit will start and operate such lamps very efficiently. In the partial circuit diagram as shown in Fig. 2, a single-fluorescent lamp 20 is connected across the apparatus output terminals 14 with the lamp electrodes 21 connected in series with the starting inductor $L_{3a}$ and capacitor $C_{4a}$ and winding $W_1$. In the partial circuit diagram as shown in Fig. 3, two fluorescent lamps 20 are similarly connected in series across the output terminals 14 of the apparatus. In such an embodiment, the capacitor portion of the starting circuit preferably is split into two capacitors $2C_{4a}$.

As is conventional in the art, where miniature metal-vapor lamps are used for general illumination purposes, it is desirable to provide some type of standby lighting so that general illumination is provided during lamp warm-up and also immediately after momentary power failures when the metal-vapor lamp has dropped out and will not start because of the residual pressures therein. The embodiment as shown in Fig. 4 comprises a circuit corresponding to that shown in Fig. 1, with most of the elements omitted in this showing, wherein an additional bi-metal switch 22, which is normally closed when not heated, is placed in receptive proximity to the miniature metal-vapor lamp 16. When the apparatus is initially energized by closing the switch 13, the bi-metal switching member 22 is closed and the incandescent source 24 is energized. Once the miniature metal-vapor lamp 16 is normally operating, the switch 22 opens, thereby deenergizing the incandescent source 24. When the switch 22 closes after a momentary power interruption, the standby incandescent source 24 is again energized to provide standby illumination. Many other types of standby energizing devices and circuitry can be substituted for the bi-metal switch in the embodiment as shown in Fig. 4.

For use with miniature metal-vapor lamps, the apparatus of Fig. 1 could be incorporated as a part of a separate ceiling fixture wherein the miniature metal-vapor lamp and standby incandescent lamp could both be enclosed within the same diffusing globe. Alternatively, such a fixture could be designed as a screw-in or plug-in incandescent lamp replacement wherein the miniature metal-vapor or metal-halide lamp could be formed therewith as an integral unit or made replaceable. Likewise, the standby incandescent source, if used, could be made integral therewith or made replaceable.

In actual tests conducted with miniature metal-halide lamps operated with square wave power, the reignition voltage spikes, as are encountered during operation with commercial sinewave power, were essentially eliminated. This is attributed to the very rapid rise time of the square waves and the lamp discharges are always in a conducting state, even during polarity reversal. The lamps were operated with square wave frequencies as low as 16 Hz and as high as 16 kHz and no noise was detected from the operating lamps. Also, noise from the ballast is eliminated.

In some discharge lamp ballasts which utilize high-reactance transformers, there is sometimes encountered a very minor noise due to the commercial AC energizing power. This can be eliminated by proper ballast construction, as is well known. In similar fashion, the inductors $L_1$ and $L_2$ of the present apparatus may, in some cases, display a very minor but tolerable noise during lamp operation due to the commercial AC energizing power. Proper construction of the inductors will eliminate even this minor noise.

## Claims

1. Ballast apparatus for operating a discharge lamp (16) with AC energy having a frequency in the acoustic range without generating in the ballast apparatus more than a very minor accompanying audible noise, which apparatus comprises input terminals (12) adapted to be connected across the AC power mains and output terminals (14) across which said lamp (16) to be operated is to be connected; current-limiting means comprising inductive reactance means ($L_1$, $L_2$) and capacitive reactance means ($C_1$) connecting to said input terminals (12), and rectifier means ($D_1$—$D_6$) having an input connected to said current-limiting means ($L_1$, $L_2$, $C_1$) to generate a current-limited low-ripple DC potential at the output (18) thereof, characterized in that said apparatus comprises a lamp starting circuit with series-connected inductor means ($L_3$) and capacitor means ($C_4$) forming a resonant circuit, said starting circuit capacitor means ($C_4$) being connected across said output terminals (14), and said starting circuit series-connected inductor means ($L_3$) and capacitor means ($C_4$) connecting via blocking capacitor means ($C_3$) across said output (18) of said AC current-limiting and rectifying means; a pair of transistors ($Q_1$, $Q_2$) comprising oscillator means electrically connected in series arrangement across said output (18) of said AC current-limiting and rectifying means, and the connection between said transistors being electrically connected to said blocking capacitor means ($C_3$); air-core transformer means comprising a pair of feedback windings ($W_1$, $W_2$) and a pair of driving windings ($W_3$, $W_5$), a first of said feedback windings ($W_1$) connecting in series with said starting circuit inductor means ($L_3$) and capacitor means ($C_4$), and the second of said feedback windings ($W_2$) and a current-controlling impedance means ($R_2$) connecting in parallel with said starting circuit inductor means ($L_3$) and

capacitor means ($C_4$), a first of said driving windings ($W_3$) connecting in circuit with the base of one of said transistors ($Q_2$) and the second one of said driving windings ($W_5$) connecting in circuit with the base of the other of said transistors ($Q_1$); and trigger means ($R_3$, $D_7$, $C_5$, $TR_1$) responsive to initial energization of said apparatus to apply a turn-on pulse to the base of one of said transistors to initiate oscillations between said transistors ($Q_1$, $Q_2$) to generate square waves; whereby after initial energization of said apparatus and until said lamp (16) is started, said transistors ($Q_1$, $Q_2$) alternately conduct to deliver square waves of current to said lamp (16) at an oscillation frequency determined by the resonant frequency of said starting circuit series-connected inductor means ($L_3$) and capacitor means ($C_4$) and after said lamp (16) is started, said transistors ($Q_1$, $Q_2$) alternately conduct to deliver square waves of current to said operating lamp (16) at an oscillation frequency determined by the rate of current flow into said second feedback winding ($W_2$).

2. Apparatus according to claim 1, characterized in that said pair of transistors ($Q_1$, $Q_2$) are connected emitter to collector in series arrangement, with the common connected emitter and collector of said transistors ($Q_1$, $Q_2$) connected to the blocking capacitor ($C_3$), a charging resistor ($R_1$) being connected parallel to one of said transistors ($Q_1$), wherein the current controlling impedance ($R_2$) is a resistor and wherein the driving windings ($W_3$, $W_5$) are connected between the emitter and base of said transistors.

3. An apparatus according to claim 1 or 2, characterized in that the discharge lamp is a miniature-type metal-vapor discharge lamp.

4. An apparatus according to claim 1, 2 or 3, characterized in that a standby incandescent light source (24) is energized after power is interrupted and the discharge lamp (16) is not yet started, and also during periods of warm-up for said discharge lamp.

5. An apparatus according to claim 1, 2, 3 or 4, characterized in that the discharge lamp is a fluorescent low pressure mercury vapor discharge lamp.

6. An apparatus according to claim 1, 2, 3, 4 or 5, characterized in that the air-core transformer means also includes a pair of supplemental windings, ($W_4$, $W_6$), one of each of said supplemental windings being connected in series with diode means ($D_8$, $D_9$) between the base and collector of one of each of said pair of transistors to prevent transistor saturation during operation of said apparatus.

7. An apparatus according to claim 6, characterized in that capacitor means ($C_2$) connects across the output of the AC current limiting and rectifying means to by-pass from the AC source any high frequency components which are generated by the oscillator means.

## Patentansprüche

1. Vorschaltgerät zum Betrieben einer Endladungslampe (16) mit Wechselspannung mit einer Frequenz im akustischen Bereich, wobei im Vorschaltgerät nicht mehr als ein sehr geringes hörbares Begleitrauschen erzeugt wird, wobei dieses Vorschaltgerät Eingangsanschlüsse (12) zum Verbinden an das Wechselspannungsnetz und Ausgangsanschlüsse (14) enthält, über die die zu betreibende Lampe (16) angeschlossen wird, wobei ein Strombegrenzer induktive Reaktanzmittel ($L_1$, $L_2$) und kapazitive Reaktanzmittel ($C_1$) in Verbindung mit den Eingangsanschlüssen (12), sowie Gleichrichtermittel ($D_1$—$D_6$) mit einem an die Strombegrenzungsmittel ($L_1$, $L_2$, $C_1$) angeschlossenen Eingang zum Erzeugen eines strombegrenzten Gleichspannungspotential mit geringer Welligkeit am Ausgang (18) enthält, dadurch gekennzeichnet, dass das Vorschaltgerät eine Lampenstartschaltung mit in Reihe geschalteten Induktormitteln ($L_3$) und Kondensatormitteln ($C_4$) zur Bildung einer Resonanzschaltung enthält, wobei die Kondensatormittel ($C_4$) der Zündschaltung über die Ausganganschlüsse (14) angeschlossen ist, in die in Reihe geschalteten Induktormittel ($L_3$) und Kondensatormittel ($C_4$) der Zündschaltung über den Ausgang (18) der erwähnten Wechselstrombegrenzenden und gleichrichtenden Mittel durch Abblockkondensatormittel ($C_3$) verbunden sind, wobei ein Transistorpaar ($Q_1$, $Q_2$) Oszilatormittel enthält, die in Reihenschaltung über den Ausgang (18) der Wechselstrombegrenzenden und gleichreichtenden Mittel elektrisch verbunden sind, und die Verbindung zwischen diesen Transistoren mit den Abblockkondensatogmitteln ($C_3$) elektrisch verbunden sind, wobei Lufttransformatormittel ein Paar Rückkopplungswicklungen ($W_1$,$W_2$) sowie ein Paar Antriebswicklungen ($W_3$, $W_5$) enthält, wobei eine erste der Rückkopplungswicklungen ($W_1$) in Reihe mit den Induktormitteln ($L_3$) und den Kondensatormitteln ($C_4$) in Reihe geschaltet ist und die zweite der Rückkopplungswicklungen ($W_2$) und eine Stromsteuerimpedanz ($R_2$) parallel mit dem Induktor ($L_3$ und dem Kondensator ($C_4$) der Zündschaltung verbunden ist, wobei eine erste der Antriebswicklungen ($W_3$) in die Basisleitung eines der Transistoren ($Q_2$) und die zweite der Antriebswicklungen ($W_5$) in die Basisschaltung des anderen der Transistoren ($Q_1$) aufgenommen sind, und Triggermittel ($R_3$, $D_7$, $C_5$, $TR_1$) enthält, die als Anfangserregung des Vorschaltgeräts zum Anlegen eines Einschaltimpulses an die Basis eines der Transistoren zum Einleiten von Schwinkgungen zwischen diesen Transistoren ($Q_1$, $Q_2$) zum Erzeugen von Rechteckimpulsen ansprechen, wobei nach der Anfangserregung des Vorschaltgeräts und bis zum Zünden dieser Lampe (16) die Transistoren ($Q_1$, $Q_2$), zum Erzeugen von Rechteckstromimpulsen zur Lampe (16) bei einer Zündfrequenz, die durch die Resonanzfrequenz des in Reihe geschalteten Induktors ($L_3$) und des Kondensators ($W_4$) der Zündschaltung bestimmt wird, und nach dem Zünden der Lampe (16) abwechselnd in den leitenden Zustand kommen, wobei die Transistoren ($Q_1$, $Q_2$) zur Lieferung von Rechteckstromimpulsen zur Lampe (16) im Betrieb bei einer Schwingfrequenz abwechselnd in den leitenden Zustand kommen, die durch die Geschwindigkeit des Stromflusses in die zweiten Rückkopplungswicklung ($W_2$) bestimmt wird.

2. Vorschaltgerät nach Anspruch 1, dadurch gekennzeichnet, dass das Transistorpaar ($Q_1$, $Q_2$) mit ihren Emittern in Reihenschaltung mit ihren Kollektoren angeschlossen sind, wobei die gemeinsam angeschlossen Emitter und Kollektoren der Transistoren ($Q_1$, $Q_2$) mit dem Abblockkondensator ($C_3$) verbunden sind, wobei ein Belastungswiderstand ($R_1$) parallel zu einem der Transistoren ($Q_1$) angeschlossen ist, wobei die Stromsteuerimpedanz ($R_2$ ein Widerstand ist und die Antriebswicklungen ($W_3$, $W_5$) zwischen dem Emitter und der Basis der Transistoren angeschlossen sind.

3. Vorschaltgerät nach Anspruch 1 oder 2, dadurch gekennzeichnet, dass die Entladungslampe einer Miniatur-Metalldamfentladungslampe ist.

4. Vorschaltgerät nach Anspruch 1, 2 oder 3, dadurch gekennzeichnet, dass eine Bereitschafts-Glühlichtquelle (24) nach einer Stromunterbrechung und vor dem Zünden der Entladungslampe (16) sowie in dem Anwärmperioden der genannten Entladungslampe aktiviert wird.

5. Vorschaltgerät nach Anspruch 1, 2, 3 oder 4, dadurch gekennzeichnet, dass die Entladungslampe eine Niederdruckquecksilberdampf-Leuchtstofflampe ist.

6. Vorschaltgerät nach Anspruch 1, 2, 3, 4 oder 5, dadurch gekennzeichnet, dass der Lufttransformator auch ein Paar ergänzender Wicklungen ($W_4$, $W_6$) enthält, die jeweils mit Dioden ($D_8$, $D_9$) zwischen der Basis und dem Kollektor jedes der Transistorpaare zur Vermeidung von Transistorsättigung im Betrieb des Vorschaltgeräts in Reihe geschaltet ist.

7. Vorschaltgerät nach Anspruch 6, dadurch gekennzeichnet, dass der Kondensator ($C_2$) über den Ausgang der Wechselstrombegrenzenden und gleichrichtenden Mittel verbunden ist, um alle vom Oszillator erzeugten Hochfrequenzkomponenten aus der Wechselspannungsquelle zu umgehen.

**Revendications**

1. Appareil de ballast pour le fonctionnement d'une lampe à décharge (16) avec de l'énergie de courant alternatif d'une fréquence située dans la gamme acoustique sans engendrer, dans l'appareil de ballast, plus qu'un bruit très faiblement perceptible, appareil qui comporte des bornes d'entrée (12) destinées à être connectées au réseau de tensions alternatives et des bornes de sortie (14) à laquelle ladite lampe (16) doit être connectée; des moyens de limitation de courant constitués par des moyens de réactance inductive ($L_1$, $L_2$) et des moyens de réactance capacitive ($C_1$) connectés auxdites bornes d'entrée (12), et des moyens redresseurs ($D_1$—$D_6$) présentant une entrée connectée auxdits moyens de limitation de

courant ($L_1$, $L_2$, $C_1$) pour engrendrer un potentiel courant continu d'ondulation faible limité en courant à la sortie (18) de ces derniers, caractérisé en ce que l'appareil est constitué par un circuit d'amorçage de lampe comportant des moyens inducteurs ($L_3$) montés en série et des moyens de condensateur ($C_4$) formant un circuit de résonance, ledit moyen de condensateur ($C_4$) du circuit d'amorçage étant connecté par l'intermédiaire desdites bornes de sortie (14) et ledit moyen d'inducteur ($L_3$) et les moyens de condensateur ($C_4$) montés en série dudit circuit d'amorçage étant connectés par l'intermédiaire de moyens de condensateur de blocage ($C_3$) par ladite sortie (18) desdits moyens de limitation de courant alternatif et de redressement; une paire de transistors ($Q_1$, $Q_2$) constitués par des moyens oscillateurs montés en série par l'intermédiaire de ladite sortie (18) desdits moyens de limitation de courant alternatif et de redressement, et la connexion entre lesdits transistors étant connectée auxdits moyens de condensateur de blocage ($C_3$); des moyens de transformateur à air, qui sont constitués par une paire de spires ($W_1$, $W_2$) à réaction et une paire de commande ($W_3$, $W_5$), la première desdites spires à réaction ($W_1$) étant montée en série avec lesdits moyens d'inducteur ($L_3$) et les moyens de condensateur ($C_4$) du circuit d'amorçage et la deuxième desdites spires à réaction ($W_2$) et un moyen d'impédance de commande de courant ($R_2$) étant montés en parallèle avec lesdits moyens d'inducteur ($L_3$) et avec les moyens de condensateur ($C_4$) du circuit d'amorçage, la première desdites spires de commande ($W_3$) étant montée en circuit avec la base de l'un desdits transistors ($Q_2$) et la deuxième desdites spires ($W_5$) de commande étant montée en circuit avec la base de l'autre desdits transistors ($Q_1$), et des moyens de d'enclenchement ($R_3$, $D_7$, $C_5$, $TR_1$) qui sont sensibles à l'excitation dudit appareil pour délivrer une impulsion d'amorçage à la base de l'un desdits transistors pour réaliser des oscillations entre lesdits transistors afin d'engendrer des ondes en créneaux; après quoi, après excitation initiale dudit appareil et amorçage de ladite lampe, lesdits transistors ($Q_1$, $Q_2$) sont alternativement conducteurs pour délivrer des ondes en créneaux de courant à ladite moyen de lampe (16) à une fréquence d'oscillation, qui est déterminée par la fréquence de résonance desdits moyens d'inducteur ($L_3$) et de moyens de condensateur ($C_4$) montés en série du circuit d'amorçage et après amorçage de ladite lampe (16), lesdits transistors ($Q_1$, $Q_2$) sont alternativement conducteurs pour délivrer des ondes en créneaux de courant à ladite lampe (16) en fonctionnement à une fréquence d'oscillation, qui est déterminée par la vitesse à laquelle le courant circule vers ladite deuxième spire à réaction ($W_2$).

2. Appareil selon la revendication 1, caractérisé en ce que la paire de transistors ($Q_1$, $Q_2$) est connectée à l'aide du montage en série d'émetteur-collecteur, l'émetteur et le collecteur montés en commun desdits transistors ($Q_1$, $Q_2$) étant connectés au condensateur de blocage ($C_3$), une résistance de charge ($R_1$) qui est montée en parallèle à l'un desdits transistors ($Q_1$), dans lequel le courant commandant l'impédance ($R_2$) est une résistance et dans lequel les spires de commande sont connectées entre l'émetteur et la base desdits transistors.

3. Appareil selon la revendication 1 ou 2, caractérisé en ce que la lampe à décharge est une lampe à décharge à vapeur métallique du genre miniature.

4. Appareil selon la revendication 1, 2 ou 3, caractérisé en ce qu'une source de lumière à incandescence de secours (24) est excitée après l'interruption de l'alimentation et la lampe à décharge (16) n'est pas encore amorcée, ainsi que pendant les périodes d'échauffement de ladite lampe à décharge.

5. Appareil selon la revendication 1, 2, 3 ou 4, caractérisé en ce que la lampe à décharge est une lampe à décharge dans la vapeur de mercure à basse pression luminescente.

6. Appareil selon la revendication 1, 2, 3, 4 ou 5, caractérisé en ce que les moyens de transformateur à air comportent également une paire de spires supplémentaires ($W_4$, $W_6$), l'une de toutes lesdites spires supplémentaires étant montée en série avec des moyens de diode ($D_8$, $D_9$) entre la base et le collecteur de chaque transistor de ladite paire de transistors afin d'empêcher la saturation du transistor pendant le fonctionnement dudit appareil.

7. Appareil selon la revendication 6, caractérisé en ce qu'un moyen de condensateur ($C_2$) est connecté par l'intermédiaire de la sortie de moyens de redressement et de limitation de courant alternatif pour shunter la source de courant alternatif de tous les composants à haute fréquence qui sont engendrés par les moyens d'oscillateur.

FIG. 1

FIG. 2

0 091 724

FIG. 3

FIG.4